# EUROPÄISCHE PATENTSCHRIFT

(11) **EP 0 280 129 B1**
(45) Veröffentlichungstag und Bekanntmachung des Hinweises auf die Patenterteilung: **21.04.1993**
(21) Anmeldenummer: 88102070.5
(22) Anmeldetag: 12.02.1988
(51) Int. Cl.: G11B 23/02, G11B 33/04

(54) **Aufhängevorrichtung für einen Behälter**
Suspension device for a container
Dispositif de suspension pour un boîtier

(30) Priorität: 24.02.1987 DE 8702812 U
(43) Veröffentlichungstag der Anmeldung: 31.08.1988
(73) Patentinhaber: BASF Magnetics GmbH, 68165 Mannheim (DE)
(72) Erfinder: Thiele, Hartmut, D-8000 München 71 (DE); Mauser, Heinz, D-8031 Gilching (DE)
(74) Vertreter: Münch, Volker, Dr.

(56) Entgegenhaltungen:
- DE-U- 8 615 166
- FR-A- 2 423 028
- GB-A- 2 022 555
- US-A- 4 177 896
- US-A- 4 333 568
- US-A- 4 363 403
- US-A- 4 536 979
- US-A- 4 634 004

## Beschreibung

Die Erfindung betrifft eine Aufhängevorrichtung bestehend aus einem rechteckigen Behälter zur Aufnahme von aufgespulten bandförmigen Bild- und Tonaufzeichnungsträgern, bestehend aus Boden- und Deckelteil, dazwischenliegenden zurückgesetzten Stirnwänden mit an den Stirnwänden umlaufenden vorspringenden Borden von Boden- und Deckelteil, mit einem Rückenteil und mit einem an einer Stirnwand benachbart einer Ecke angebrachten Halterungselement, und einem an einer Wand befestigten Einhakelement, das mit dem freien Ende des Halterungselement zusammenwirkt.

Eine derartige Vorrichtung ist aus der US-Patentschrift 4 177 896 bekannt, worin ein extrusionsgeblasener doppelwandiger Behälter beschrieben ist, dessen eine Stirnwand im oberen Teil eine Hinterschneidung aufweist und wobei ein nach unten weisender Sporn ausgehend von der Stirnwand vor der Hinterschneidung als Einhakelement für eine an einer Wand befestigte Leiste mit L-förmigem Profil vorgesehen ist. Das freie Ende der Leiste besitzt eine nach oben weisende Verdickung. Zum sicheren Greifen und Aufnehmen beziehungsweise Abhängen des Behälters ist an der zur Aufhängevorrichtung gegenüberliegenden Rückseite des Behälters ein aufklappbarer U-förmiger Griff angebracht. Dieser Behälter ist aufwendig konstruiert und bietet nicht genügend Bequemlichkeit beim Greifen und Archivieren. Außerdem ist von Nachteil, daß der Behälter nicht die in den letzten Jahren entstandenen Normabmessungen für Videocassetten-Behälter erfüllt.

Derartige Behälter sind beispielsweise in den DE-OS 29 13 812, 33 35 558, 35 02 536, der EP 0 177 415, den US-PS 3 876 071, 4 011 940, 4 363 403, 4 365 711 und dem US-Design 262 414 beschrieben. Sie sind im allgemeinen buchförmig gestaltet und bestehen aus einem Bodenteil und einem Deckelteil mit Bord an den Vorder- und Seitenwänden und sind über eine Rückwand mittels rillenförmiger Scharniere, die eine verringerte Stärke gegenüber den sonst verwendeten Konstruktionsteilen aufweisen, verbunden. Die Behälter, "Hardbox" genannt, können die jedem Fachmann bekannten VHS-, Beta- oder U-Matic-Video-Cassetten enthalten.

Zur Archivierung dieser Cassetten, beispielsweise in Rundfunk- und Fernsehanstalten, besteht das dringende Bedürfnis eines einfachen und sicheren Handlings der diese Cassetten enthaltenden Behälter, zumal diese in großen Mengen anfallen.

Deshalb bestand die Aufgabe, einen Behälter und eine damit zusammenwirkende Aufhängevorrichtung zu finden, die bequem handhabbar ist, eine preisgünstige Herstellung der Behälter gestattet und wobei der Behälter mit einer Stirnseite an der Wand anliegt.

Erfindungsgemäß wurde die Aufgabe gelöst mit einer Aufhängevorrichtung mit den im kennzeichnenden Teil des Anspruchs 1 genannten Merkmalen.

Nähere Einzelheiten der Erfindung gehen aus den Unteransprüchen, der Beschreibung und den Zeichnungen hervor. Nachfolgend wird die Erfindung anhand der Zeichnungen näher erläutert und zwar zeigen
- Figur 1: eine perspektivische Teilansicht einer Ausführungsform des Behälters sowie zwei Ausführungsformen von wandseitigen Einhakelementen
- Figur 2: einen Querschnitt der Aufhängevorrichtung gemäß Figur 1
- Figur 3: einen Querschnitt einer anderen Ausführungsform sowie eine wandseitige Befestigung
- Figur 3a: eine perspektivische Ansicht eines Einhakelements gemäß Figur 3
- Figur 3b: eine vergrößerte Teilansicht von Figur 3
- Figuren 4: Querschnitte durch eine weitere Ausführungsforme der Aufhängevorrichtung
- Figuren 7 - 8: perspektivische Ansichten von wandseitigen Befestigungselementen für die Aufhängevorrichtungen.

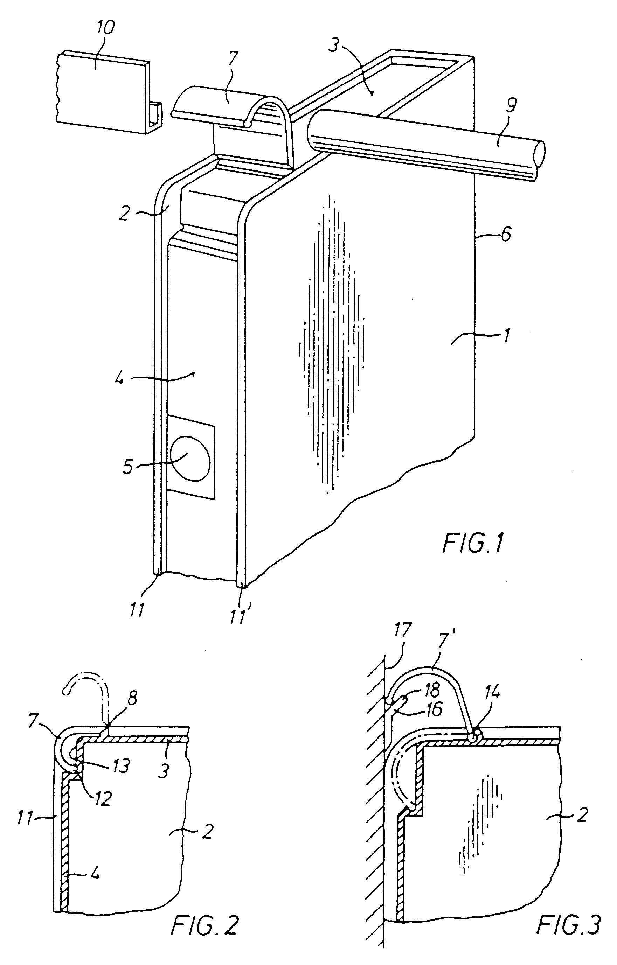

Ein Behälter einer derartigen Aufhängevorrichtung besitzt gemäß Figur 1 ein Boden- (1) und ein Deckelteil (2) mit Bord an den Vorder- und Seitenwänden (11, 11'), den dazwischenliegenden Stirnwänden (3, 4) und dem Rückenteil (6). In der vorderen Stirnwand (4) ist ein Riegel (5) zur Entriegelung und Öffnung des Behälters vorhanden. Der Behälter kann einstückig aus Polypropylen gespritzt werden.

Das Wesen der Erfindung besteht darin, daß sich über die gesamte Breite zwischen den Borden (11, 11') ein bewegliches Halteelement (7, 7', 20') erstreckt, welches herausklappbar oder in Richtung einer Stirnwand ausrastbar oder verschiebbar ist. Dabei ist seine Form so bemessen, daß es im eingeklappten oder eingerasteten Zustand nicht über die Borde (11, 11') hinausragt.

In einer Ausführungsform ist an der zwischen vorderer Stirnwand (4) und Rückenteil (6) befindlichen Stirnwand (3) im Bereich der die beiden Stirnwände verbindenden im allgemeinen abgerundeten Kante eine Lasche (7) angespritzt. Diese Lasche ist an ihrem offenen Ende U-förmig gebogen und ist an der Anspritzstelle (8) klappbar angebracht (Figur 2). Im aufgeklappten Zustand (Figur 1) der Lasche (7) kann der Behälter entweder an einer Stange (9), welche beispielsweise Rundprofil hat oder an einer Leiste (10) mit U-Profil aufgehängt werden. Diese Aufhängevorrichtungen (9, 10) sind an einer Wand, einem Gestell oder ähnlichem in üblicher Weise befestigt. Die Länge der gebogenen Lasche (7) ist so bemessen, daß sie im eingeklappten Zustand (Figur 2) nicht über die Borde (11, 11ʹ) des Boden- beziehungsweise Deckelteils herausragt. Dabei ist im oberen Teil der Stirnwand eine stufenförmige Ausnehmung (13) vorhanden. Das freie Ende der Lasche kann eine Rippe (12) aufweisen, die in eine Hinterschneidung der Ausnehmung (13) einschnappt.

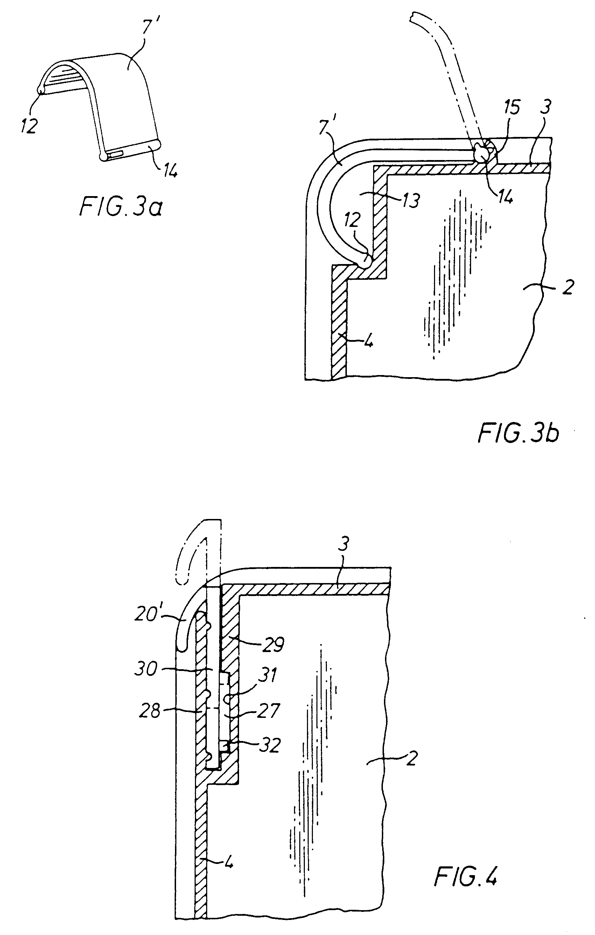

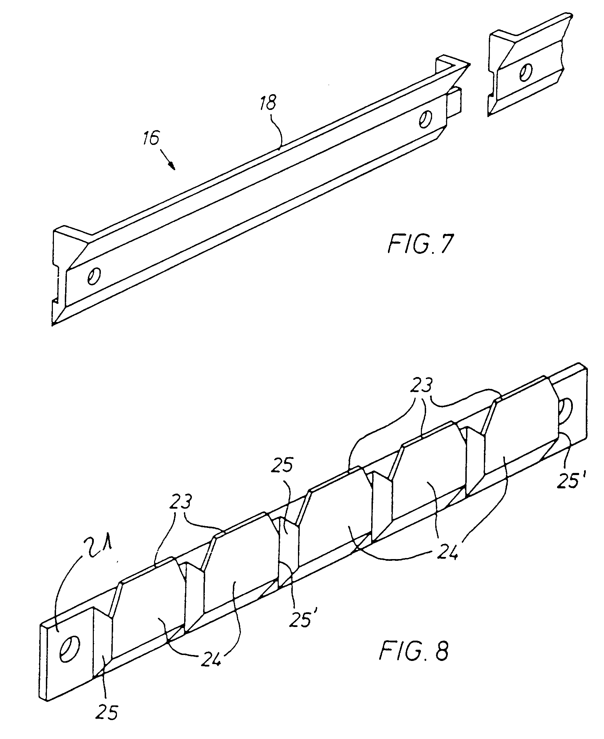

In einer anderen Ausführungsform ist die Lasche (7ʹ) (Figur 3, 3a) ein getrenntes Teil, welches mit der Drehachse (14) bei geöffnetem Zustand des Behälters in eine Ausbuchtung (15) der Stirnwand (3) eingesteckt wird. Drehachse und Ausbuchtung können Zapfen beziehungsweise Nuten enthalten, die so einander zugeordnet sind, daß im aufgeklappten Zustand (Figur 3, 3b) die Lasche eine Raststellung hat. Dabei hängt die Lasche in einer Befestigungseinrichtung (16), welche an einer Wand (17) befestigt ist und deren oberes freies Ende (18) unter spitzem Winkel von der Wand wegweist (Figur 7). Andere Befestigungseinrichtungen, beispielsweise gemäß Figur 8, sind selbstverständlich auch denkbar. Die Lasche (7ʹ) besteht vorzugsweise aus einem schlag- und biegefesten Kunststoff, beispielsweise Makrolon. Ein anderes besonders bevorzugtes Befestigungselement für die in der Figure 1 dargestellte Aufhängevorrichtung ist die in Figur 8 dargestellte Leiste (21), welche erkerartige Vorsprünge (23) besitzt, an deren vorderen Flächen (24) die Stirnwand (4) des Behälters im Bereich der Ausnehmung (13ʹ) anliegt und an deren Seitenflächen (25, 25ʹ) an den vorspringenden Borden (11, 11ʹ) des Behälters anliegen, so daß jeder Behälter verschiebungsfrei an einen Vorsprung (23) eingehängt ist.

Schließlich zeigt Figur 4 eine weitere Ausführungsform der neuerungsgemäßen Aufhängevorrichtung. Auch bei dieser ist im Bereich der Kante ein nach unten weisender Sporn (20ʹ) vorhanden, der jedoch nicht einteilig mit einer Stirnwand des Behälters verbunden ist. Vielmehr ist der obere Teil der Stirnwand (4) doppelwandig ausgeführt und in dem Innenraum (27) zwischen der äußeren Wandung (28) und der inneren Wandung (29) ist verschiebbar eine Leiste (30) einteilig mit dem Sporn (20ʹ) verbunden. Durch an der Innenseite der äußeren Wandung (28) sowie an der zu dieser benachbarten Seite der Leiste (30) ausgeprägte einander zugeordnete Erhebungen und Nuten entstehen für die Aufhängevorrichtung verschiedene Raststellungen. Dabei ist der Verschiebebereich der Aufhängevorrichtung durch eine an der Innenseite der inneren Wandung (29) vorhandene Ausnehmung (31) und eine an der zur inneren Wandung benachbarten Seite der Leiste vorhandene Sporn (32), welcher in die Ausnehmung eingreift, begrenzt. Die beschriebene Aufhängevorrichtung ist bei geöffnetem Behälter einsteckbar.

Die vorstehend beschriebenen neuerungsgemäßen Aufhängevorrichtungen gestatten, ohne die genormte Konstruktion der Behälter zu verändern, ein außerordentlich einfaches bequemes Handhaben beim Archivieren und sind noch dazu einfach herzustellen und außerdem robust einsetzbar sowie mit einer Vielzahl von wandseitigen Befestigungseinrichtungen kombinierbar.

## Patentansprüche

1. Aufhängevorrichtung bestehend aus einem rechteckigen Behälter zur Aufnahme von aufgespulten bandförmigen Bild- und Tonaufzeichnungsträgern, der Boden- und Deckelteil (1, 2) und dazwischenliegende zurückgesetzte Stirnwände besitzt, (3, 4) mit an den Stirnwänden umlaufenden vorspringenden Borden (11, 11') von Boden- und Deckelteil, mit einem Rückenteil (6) und mit einem an einer Stirnwand benachbart einer Ecke angebrachten Halterungselement, und einem an einer Wand befestigten Einhakelement, das mit dem freien Ende des Halterungselementes zusammenwirkt, dadurch gekennzeichnet, daß der Behälter mit seinem Boden (11, 11') an der Wand anliegt, daß das Halterungselement (7, 7', 20') herausklappbar oder in Richtung einer Stirnwand ausrastbar oder verschiebbar ist und sich über die gesamte Breite zwischen den Borden (11, 11') erstreckt, wobei seine Form so bemessen ist, daß es im eingeklappten oder eingerasteten Zustand nicht über die Borde (11, 11') hinausragt.

2. Aufhängevorrichtung nach Anspruch 1, dadurch gekennzeichnet, daß als Halterungselement eine klappbare Lasche (7) angespritzt ist, deren freies Ende U-förmig gebogen ist, wobei der U-förmig gebogene Teil der Lasche im eingeklappten Zustand in einer Ausnehmung (13) der Stirnwand (4) sitzt und wobei die Lasche in Aufklappstellung bis 90° zur Stirnwand (3) aufklappbar ist und wobei als wandseitiges Einhakelement eine Stange (9) oder eine Leiste (10, 16, 21) verwendet wird.

3. Aufhängevorrichtung nach Anspruch 2, dadurch gekennzeichnet, daß das freie Ende der Lasche (7) eine Rippe (12) enthält, die in eine Hinterschneidung der Ausnehmung (13) der Seitenwand (4) einrastet.

4. Aufhängevorrichtung nach Anspruch 2, dadurch gekennzeichnet, daß die Drehachse (14) der U-förmig gebogenen Lasche (7') in eine Ausbuchtung (15) der Stirnwand (3) des Behälters einsteckbar ist und durch die Ausbildung eines Zapfens und einer Nut in der Drehachse beziehungsweise in der Innenseite der Ausbuchtung eine Raststellung im aufgeklappten Zustand der Lasche (7') aufweist.

5. Aufhängevorrichtung nach Anspruch 1, dadurch gekennzeichnet, daß das Einhakelement eine Leiste (21) ist, welche mehrfach vorzugsweise stumpfwinklig abgeknickt ist, deren unteres Ende an einer Wand (17) befestigt ist und deren oberes freies Ende das Halterungselement (7, 7', 20) hintergreift.

6. Aufhängevorrichtung nach Anspruch 1, dadurch gekennzeichnet, daß ein oder mehrere wandseitige Einhakelemente erkerartig (23) ausgebildet sind, deren Vorderflächen (24) an der Innenwand (4) des Behälters im Bereich der Ausnehmung (13') anliegen und die Seitenwände (2, 25') an den vorspringenden Borden (11, 11') des Boden- und Deckelteils (1, 2) des Behälters anliegen.

7. Aufhängevorrichtung nach Anspruch 1, dadurch gekennzeichnet, daß das Halterungselement ein spornartiger vertikal verschiebbarer nach unten gerichteter Vorsprung (20') im Bereich der abgerundeten Ecke zwischen den Stirnwänden (3 und 4) ist, dessen leistenförmiges Widerlager (30) in dem Innenraum (27) des im oberen doppelwandig ausgebildeten (28, 29) Teil der Stirnwand (4) des Behälters ruht, dessen Verschiebebereich durch einen Sporn (32) am Widerlager (30) bestimmt ist, der sich in einer Ausnehmung (31) der Innenwand (29) befindet und wobei das Widerlag er durch einander zugeordnete Vorsprünge beziehungsweise Nuten an der Innenseite der Außenwand (28) beziehungsweise an dem Widerlager (30) einrastbar ist (Figur 4)

## Claims

1. A suspension device comprising a rectangular container for receiving wound-up picture and sound recording media which has a bottom part (1) and top part (2) and set-back end walls (3, 4) lying in between, having projecting borders (11, 11') of bottom part and top part running around the end walls, having a rear part (6) and having a securing element attached to an end wall, adjacent to a corner, and a hook-in element which is fastened to a wall and interacts with the free end of the securing element, wherein the container bears with its borders (11, 11') against the wall, the securing element (7, 7', 20') is able to be swung out or is able to be disengaged or displaced in the direction of one end wall and extends over the entire width between the borders (11, 11'), its shape being dimensioned in such a way that, in the swung-in or engaged state, it does not protrude beyond the borders (11, 11').

2. A suspension device as claimed in claim 1, wherein a hinged tab (7) is molded on as securing element, the free end of which tab is bent in the shape of a U, the U-shape-bent part of the tab being located in a recess (13) of the end wall (4) in the swung-in state and the tab being able in the swinging-open position to be swung open to 90° with respect to the end wall (3) and a bar (9) or a strip (10, 16, 21) being used as the wall-side hook-in element.

3. A suspension device as claimed in claim 2, wherein the free end of the tab (7) contains a rib (12), which engages in an undercut of the recess (13) of the side wall (4).

4. A suspension device as claimed in claim 2, wherein the pivot pin (14) of the U-shape-bent tab (7') is able to be inserted into a protuberance (15) of the end wall (3) of the container and, due to the formation of a journal and a groove in the pivot pin, and respectively, in the inside of the protuberance, has a stop location in the swung-open state of the tab (7').

5. A suspension device as claimed in claim 1, wherein the hook-in element is a strip (21) which is multiply bent-off, preferably at obtuse angles, the lower end of which is fastened to a wall (17) and the upper free end of which engages behind the securing element (7, 7', 20').

6. A suspension device as claimed in claim 1, wherein one or more wall-side hook-in elements are designed in an alcove-like manner (23), the front faces (24) of which bear against the inner wall (4) of the container in the region of the recess (13'), and the side walls (2, 25') bear against the projecting borders (11, 11') of the bottom part (1) and top part (2) of the container.

7. A suspension device as claimed in claim 1, wherein the securing element is a spur-like vertically displaceable downwardly directed projection (20') in the region of the rounded-off corner between the end walls (3 and 4), the strip-shaped abutment (30) of which projection rests in the inner space (27) of the part of the end wall (4) of the container, which at the top is of a double-walled design (28, 29), the displacing range of which is determined by a spur (32) on the abutment (30), which spur is located in a recess (31) of the inner wall (29) and the abutment being able to engage by mutually assigned projections and grooves on the inner side of the outer wall (28) and, respectively, on the abutment (30) (Figure 4).

## Revendications

1. Dispositif de suspension composé d'un récipient à angles droits destiné à recevoir des supports d'enregistrement d'image et de son sous forme de bandes, enroulés, comportant une partie de fond et de couvercle (1,2), des parois frontales (3,4) intermédiaires placées en retrait, avec des bords de pourtour (11,11') faisant saillie sur les parois frontales et appartenant à la partie de fond et de couvercle, avec une partie arrière (6) et un élément de fixation, monté sur une paroi frontale au voisinage d'un angle et un élément d'accrochage fixé à une paroi, qui coopère avec l'extrémité libre de l'élément de fixation, caractérisé en ce que le récipient s'applique, par son fond (11,11'), sur la paroi, en ce que l'élément de fixation (7,7',20') est ouvrable par rabattement ou décliquetable ou déplaçable en direction d'une paroi frontale, et s'étend sur la totalité de la largeur, entre les bords (11,11'), sa forme étant de dimensions telles qu'il ne saille pas des bords (11,11') lorsqu'il est à l'état replié ou encliqueté.

2. Dispositif de suspension selon la revendication 1, caractérisé en ce qu'est surmoulée par injection, à titre d'élément de fixation, une patte (7) rabattable, dont l'extrémité libre est pliée en U, la partie pliée en U de la patte reposant, à l'état replié, dans un évidement (13) de la paroi frontale (4) et la patte étant ouvrable par rabattement dans la position d'ouverture rabattue, jusqu'à faire 90 degrés par rapport à la paroi frontale (3), et une tige (9) ou une bande (10,16,21) étant utilisée à titre d'élément d'accrochage, côté paroi.

3. Dispositif de suspension selon la revendication 2, caractérisé en ce que l'extrémité libre' de la patte (7) contient une nervure (12) s'encliquetant dans une contredépouille de l'évidement (13) de la paroi latérale (4).

4. Dispositif de suspension selon la revendication 2, caractérisé en ce que l'axe de rotation (14) de la patte (7') pliée en U est enfichable dans un évidement (15) ménagé sur la paroi frontale (3) du récipient et présente, par la réalisation d'un tourillon et d'une rainure dans l'axe de rotation ou dans la face intérieure de l'évidement, une position d'encliquetage à l'état rabattu de la patte (7').

5. Dispositif de suspension selon la revendication 1, caractérisé en ce que l'élément d'accrochage est une bande (21), repliée plusieurs fois, de préférence avec des angles obtus, bande dont l'extrémité inférieure est fixée sur une paroi (17) et dont l'extrémité libre supérieure vient saisir l'arrière de l'élément de fixation (7,7',20').

6. Dispositif de suspension selon la revendication 1, caractérisé en ce qu'un ou plusieurs éléments d'accrochage sont réalisés en forme d'oreille, dont les faces avant (24) s'appliquent sur la paroi intérieure (4) du récipient, dans la zone de l'évidement (13') et les parois latérales (2,25') appuient sur les bords (11,11') en saillie des parties de fond et de couvercle (1,2) du récipient.

7. Dispositif de suspension selon la revendication 1, caractérisé en ce que l'élément de fixation est une saillie (20') en forme d'éperon, déplaçable verticalement et orientée vers le bas, dans la zone de l'angle arrondi situé entre les parois latérales (3 et 4), dont le contre-appui (30) en forme de bande repose dans l'espace intérieur (27) de la partie, réalisée à double paroi (28,29) en partie supérieure, de la paroi frontale (4) du récipient, dont la plage de déplacement est déterminée par un éperon (32) situé sur le contre-appui (30) qui se trouve dans un évidement (31) de la paroi intérieure (29) et le contre-appui étant susceptible d'être encliqueté, au moyen de saillies, ou de rainures, associées entre elles, sur la face intérieure de la paroi extérieure (28) ou sur le contre-appui (30) (figure 4).
